# EUROPÄISCHE PATENTSCHRIFT

(11) **EP 0 910 760 B1**
(45) Veröffentlichungstag und Bekanntmachung des Hinweises auf die Patenterteilung: **30.07.2003**
(21) Anmeldenummer: 98904153.8
(22) Anmeldetag: 28.01.1998
(51) Int. Cl.: F16J 9/14, F16J 9/22

(54) **HUBKOLBENBRENNKRAFTMASCHINE**
INTERNAL COMBUSTION PISTON ENGINE
MOTEUR A COMBUSTION INTERNE A PISTON ALTERNATIF

(30) Priorität: 16.04.1997 DE 19715759
(43) Veröffentlichungstag der Anmeldung: 28.04.1999
(73) Patentinhaber: MAN B & W Diesel A/S, 2450 Copenhagen SV (DK)
(72) Erfinder: ROGILD, Mads, DK-2860 Soborg (DK); CRONE, Erik, DK-2610 Rodovre (DK)
(74) Vertreter: Munk, Ludwig, Dipl.-Ing.
(86) Internationale Anmeldenummer: EP9800443
(87) Internationale Veröffentlichungsnummer: WO98046915

(56) Entgegenhaltungen:
- EP-A- 0 253 069
- WO-A-97/11295
- DE-A- 3 924 982
- DE-A- 4 327 621

## Beschreibung

Die Erfindung betrifft eine Hubkolbenbrennkraftmaschine, insbesondere einen Großdieselmotor, mit wenigstens einem in einem Zylinder angeordneten Kolben, der mit einem Kolbenringpaket mit mehreren am Zylinder anliegenden, in einer jeweils zugeordneten Nut aufgenommen Kolbenringen versehen ist, betehend aus wenigstens ein gasdichter, ineinander eingreifende Enden aufweisender Kolbenring und/oder wenigstens ein Standardkolbenring mit unter Bildung eines einen Leckagedurchlaß ergebenden Spalts voneinander beabstandeten Enden wobei zumindest jedem gasdichten Kolbenring wenigstens ein extra vorgesehener Leckagedurchlaß zugeordnet ist, gemäß dem Oberbegriff des Anspruchs 1.

Bei einer bekannten Anordnung dieser Art (WO 97/11295) sind als im Bereich der Unterseite von gasdichten Kolbenringen angeordnete, radiale Nuten ausgebildete Leckagedurchlässe vorgesehen. Die genannten Nuten besitzen dabei parallele Flanken, so daß sich über der ganzen radialen Dicke des zugeordneten Kolbenrings derselbe lichte Nutquerschnitt ergibt. Dieser bleibt daher auch im Falle von Verschleiß des Kolbenrings, das heißt bei abnehmender radialer Dicke, gleich, so daß sich immer dasselbe Leckagevermögen ergibt. Nachteilig hierbei ist, daß eine verschleißabhängige Anpassung des Leckagevermögens an die Bedürfnisse des Einzelfalls nicht möglich ist.

So könnte es beispielsweise erwünscht sein, beim Einlaufen der Kolbenringe andere Druckverhältnisse im Bereich zwischen den Kolbenringen zu haben, als nach dem Einlaufen. Ebenso könnte es beispielsweise erwünscht sein, bei einem Kolbenringpaket, das unterhalb eines gasdichten Kolbenrings mehrere sogenannte Standardkolbenringe aufweist, deren Enden einen einen Leckagedurchlaß bildenden Spalt begrenzen, der sich bei Verschleiß immer weiter öffnet, womit auch die hierüber führende Leckage zunimmt, das Leckagevermögen der Leckagedurchlässe des gasdichten Kolbenrings der steigenden Leckage der Standardkolbenringe anzugleichen.

Die DE 39 24 982 A1 zeigt ein Kolbenring-Paket, bei dem die Standard-Kolbenringe im Bereich ihrer Oberseite mit durch radiale Nuten gebildeten Leckagedurchlässen versehen sind. Auch hierbei besitzen die Nuten parallele Flanken, so daß sich über der ganzen radialen Dicke des zugeordneten Kolbenrings derselbe lichte Nut-Querschnitt ergibt. Eine verschleißabhängige Anpassung des Leckagevermögens an die Bedürfnisse des Einzelfalls ist daher auch bei dieser bekannten Anordnung nicht möglich.

Hiervon ausgehend ist es daher die Aufgabe der vorliegenden Erfindung, eine Anordnung eingangs erwähnter Art mit einfachen und kostengünstigen Mitteln so zu verbessern, daß eine verschleißabhängige Anpassung der Leckage der Kolbenringe an die Bedürfnisse des Einzelfalls möglich ist.

Diese Aufgabe wird erfindungsgemäß dadurch gelöst, daß die jeweils nicht durch einen zwischen zwei Kolbenringenden vorgesehenen Spalt gebildeten Leckagedurchlässe so ausgebildet sind, daß sich ihr wirksamer Querschnitt bei Verschleiß der Kolbenringe ändert.

Hierdurch werden die oben genannten Nachteile des eingangs geschilderten Standes der Technik vollständig beseitigt, was eine hohe konstruktive Freizügigkeit ergibt. Durch Anwendung von mit zunehmendem Verschleiß der Kolbenringe zunehmenden Leckagequerschnitten bei gasdichten Kolbenringen ist es z.B. in vorteilhafter Weise möglich, bei einem Kolbenringpaket, das teilweise aus Standardkolbenringen und teilweise aus gasdichten Kolbenringen besteht, trotz der bei Verschleiß erfolgenden Vergrößerung des Spalts der Standardkolbenringe im Bereich zwischen sämtlichen Kolbenringen stets in etwa gleiche Druckverhältnisse zu erreichen. Hierbei wird dadurch, daß die Leckagedurchlässe der gasdichten Kolbenringe verschleißabhängig vergrößert werden, der gleichzeitig erfolgenden Vergrößerung des Spalts der Standardkolbenringe Rechnung getragen. Es ist daher in vorteilhafter Weise möglich, innerhalb eines Kolbenringpakets neben wenigstens einem gasdichten Kolbenring die kostengünstigeren Standardringe zu verwenden und dennoch gleiche Druckverhältnisse im Bereich zwischen sämtlichen Kolbenringen zu gewährleisten. Durch Anwendung von mit zunehmenden Verschleiß abnehmenden Leckagequerschnitten bei Standardkolbenringen ist es in vorteilhafter Weise möglich, der mit zunehmendem Verschleiß erfolgenden Vergrößerung des Spalts zwischen den Enden der Standardkolbenringe entgegenzuwirken, so daß zu jedem Zeitpunkt eine annähernd gleiche Gesamtleckage vorhanden ist, bzw. die sonst vorhandene Steigerung der Leckage verlangsamt wird. Bei Anwendung von mit zunehmendem Verschleiß abnehmenden Leckagequerschnitten ist es in vorteilhafter Weise auch möglich, z.B. den Druck im Bereich zwischen den Kolbenringen nach einer Einlaufphase zu steigern. Während des Einlaufens kann der Druck gering gehalten werden.

Mit Hilfe der erfindungsgemäßen Maßnahmen kann ersichtlich nicht nur eine hohe konstruktive Freizügigkeit erreicht werden, sondern in vorteilhafter Weise auch eine lange Lebensdauer der Kolbenringe. Die erfindungsgemäßen Maßnahmen ergeben dementsprechend eine hohe Gesamtwirtschaftlichkeit.

Vorteilhafte Ausgestaltungen und zweckmäßige Fortbildungen der übergeordneten Maßnahmen sind in den Unteransprüchen angegeben.

Nachstehend werden einige Ausführungsbeispiele der Erfindung anhand der Zeichnung näher erläutert. Hierbei zeigen:
- Figur 1: eine Teilansicht eines Zylinder-Kolbenaggregats einer Hubkolbenbrennkraftmaschine im Schnitt,
- Figur 2: die Ansicht der Enden eines gasdichten Kolbenrings,
- Figur 3: die Ansicht der Enden eines Standardkolbenrings,
- Figur 4: ein erstes Ausführungsbeispiel der Erfindung in Form einer vergrößerten Darstellung der Einzelheit IV in Figur 1,
- Figur 5: eine Draufsicht gemäß V/V in Figur 4,
- Figur 6: ein Ausführungsbeispiel mit im Bereich der Kolbenringunterseite angeordneten Nuten anhand einer Draufsicht auf einen gasdichten Kolbenring,
- Fig. 7 u. 8: Variationen zur Ausführung gemäß Figur 6,
- Figur 9: eine an die Verhältnisse eines Standardkolbenrings angepaßte Ausführung mit im Bereich der Kolbenringunterseite angeordneten Nuten,
- Figur 10: eine Ausführung mit peripherienah angeordneten Leckagedurchlässen und
- Fig. 11 u. 12: Variationen zur Ausführung gemäß Figur 10.

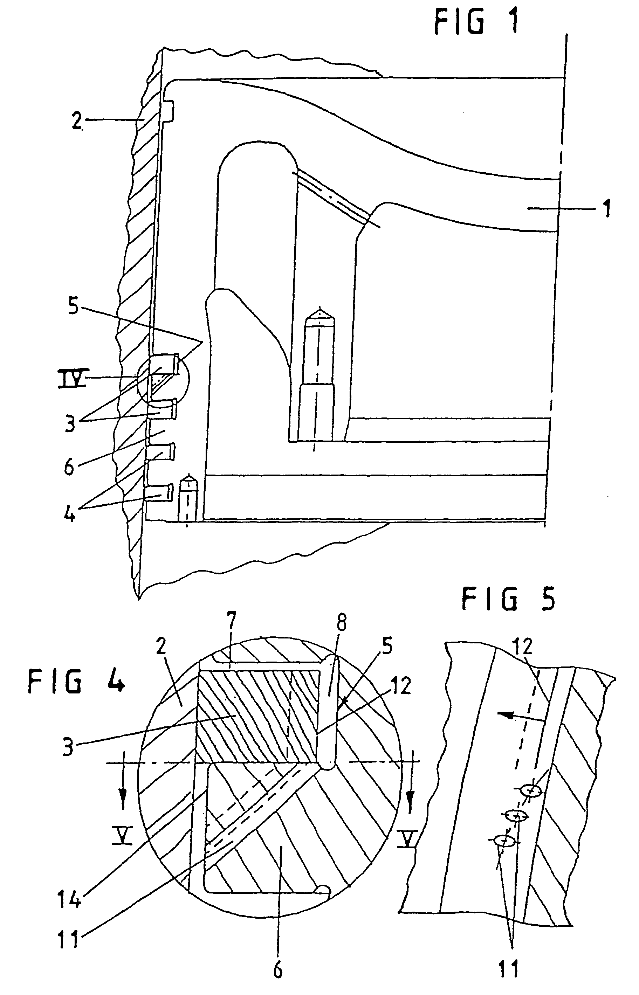

Die Figur 1 zeigt einen Kolben 1, der in einem Zylinder 2 axial bewegbar angeordnet ist. Das dargestellte Zylinder-Kolbenaggregat gehört zu einer Hubkolbenbrennkraftmaschine, beispielsweise in Form eines Großdieselmotors. Der Aufbau und die Wirkungsweise derartiger Hubkolbenbrennkraftmaschinen sind an sich bekannt.

Der Kolben 1 ist mit einem aus mehreren, übereinander angeordneten Kolbenringen 3,4 bestehenden Kolbenringpaket versehen. Die Kolbenringe 3,4 sind in einer jeweils zugeordneten Umfangsnut 5 des Kolbens 1 aufgenommen und liegen mit ihrem Außenumfang an der Innenoberfläche des Zylinders 2 an. Durch das genannte Kolbenringpaket soll der oberhalb des Kolbens 1 sich befindende Verbrennungsraum gegenüber dem unterhalb des Kolbens 1 sich befindenden Kurbelraum abgedichtet werden. Im Bereich zwischen den Nuten 5 ergeben sich umlaufende Stege 6. Die Nuten 5 besitzen gegenüber dem jeweils zugeordneten Kolbenring 3 bzw. 4 soviel Übermaß, daß sich oberhalb und radial innerhalb des Kolbenrings ein Spalt 7 bzw. 8 ergibt, wie am besten aus der vergrößerten Darstellung gemäß Figur 4 ersichtlich ist.

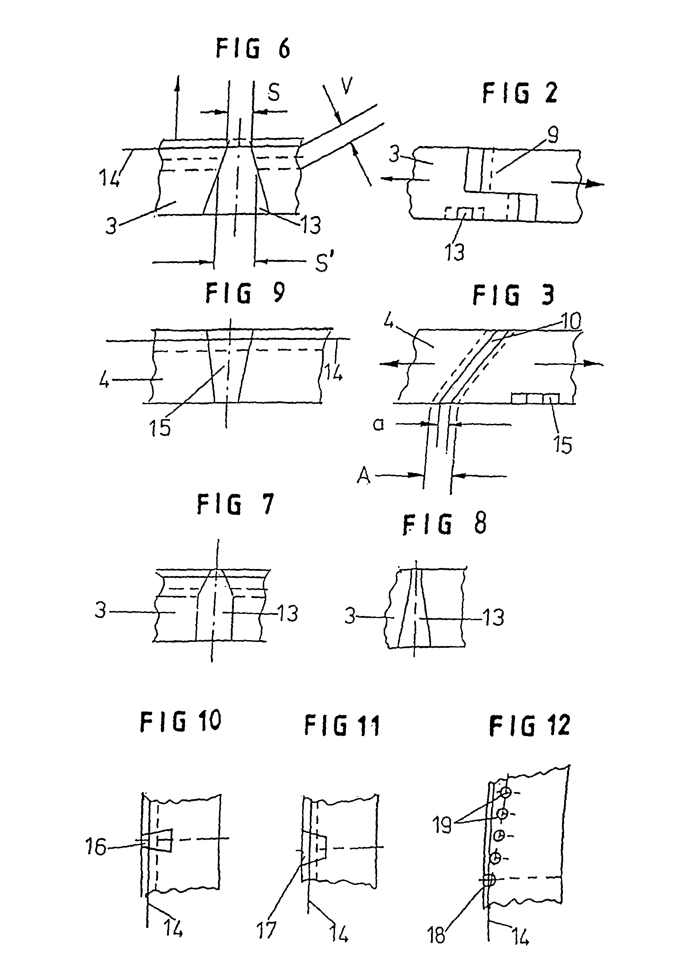

Zumindest der oberste Kolbenring des Kolbenringpakets ist als sogenannter gasdichter Kolbenring ausgebildet. Im dargestellten Beispiel gilt dies für die beiden oberen Kolbenringe 3. Diese besitzen jeweils, wie Figur 2 zeigt, in gegenseitigem gasdichtem Eingriff stehende Enden 9. Im dargestellten Beispiel sind die Enden 9 als einander überlappende Zungen ausgebildet. Es wäre aber auch ein gegenseitiger Eingriff nach Nut und Feder denkbar. Die Länge der Enden 9 ist so groß, daß der gegenseitige Eingriff und damit die Gasdichtheit auch im Falle einer radialen Aufdehnung des betreffenden Kolbenrings 3 erhalten bleibt, wie in Figur 2 mit unterbrochenen Linien angedeutet ist. Zu einer radialen Aufdehnung vorstehend erwähnter Art kommt es, wenn der Kolbenring 3 im Bereich seines Außenumfangs verschleißt, in Folge seiner Spannung aber dennoch am Zylinder 2 in Anlage bleibt.

Die unteren Kolbenringe 4 können als sogenannte Standardkolbenringe ausgebildet sein. Diese Kolbenringe sind nicht gasdicht und dementsprechend kostengünstiger. Die Standardkolbenringe 4 besitzen, wie Figur 3 zeigt, unter Bildung eines durchgehenden Spalts 10 voneinander beabstandete, schräg geschnittene Enden. Der Spalt 10 besitzt zunächst die Weite a. Wenn der Kolbenring 4 an seinem Außenumfang einem Verschleiß unterliegt, öffnet sich der Spalt 10, wie in Figur 3 durch unterbrochene Linien angedeutet ist. Es ergibt sich dabei eine vergrößerte lichte Weite A des Spalts 10. Über den Spalt 10 findet eine Leckage statt. Diese ist in Folge der verschleißabhängigen Vergrößerung der lichten Weite des Spalts 10 verschleißabhängig.

Die vorstehend erwähnte Leckage führt zu einem Druckaufbau im Bereich unterhalb des betreffenden Kolbenrings 4. Um alle Kolbenringe diesbezüglich möglichst gleich zu beanspruchen wird für möglichst gleiche Druckverhältnisse unterhalb aller Kolbenringe 3,4 des Kolbenringpakets gesorgt. Hierzu sind den sogenannten gasdichten Kolbenringen 3 jeweils mehrere, zweckmäßig gleichmäßig über den Umfang verteilte Leckagedurchlässe zugeordnet. Diese können zweckmäßig so ausgebildet sein, daß das gesamte Durchlaßvermögen aller jeweils einem gasdichten Kolbenring 3 zugeordneten Leckagedurchlässe in etwa dem Durchlaßvermögen des Spalts 10 eines Standardkolbenrings 4 entspricht. Dies soll sowohl für den Ausgangszustand als auch für die Zeit danach gelten, also auch für den Fall, daß die Kolbenringe umfangsseitig verschleißen. Dementsprechend sind die den gasdichten Kolbenringen 3 zugeordneten Leckagedurchlässe so ausgebildet, daß sich ihr wirksamer Querschnitt verschleißabhängig ändert und zwar so, daß ihr Durchlaßvermögen in derselben Weise zunimmt, wie das Durchlaßvermögen eines Spalts 10 eines Standardkolbenrings 4.

Die vorstehend erwähnten, den gasdichten Kolbenringen 3 zugeordneten Leckagedurchlässe können auf unterschiedliche Art und Weise bewerkstelligt werden.

Bei der den Figuren 1,4 und 5 zugrunde liegenden Ausführung ist jeder einen gasdichten Kolbenring 3 aufnehmende Steg 6 mit vom radial inneren Bereich der zugeordneten Nut 5 ausgehenden, schräg nach unten verlaufenden, im Bereich der Umfangsfläche des Stegs 6 ausmündenden Bohrungen 11 versehen, die zusammen mit den Spalten 7 und 8 einen um den zugeordneten Kolbenring 3 herumführenden Strömungsweg bilden, durch den die ober- und unterhalb des Kolbenrings 3 liegenden Bereiche des Spalts zwischen Kolben 1 und Zylinder 2 miteinander verbunden werden. Die Eingänge der Bohrungen 11 sind, wie am besten aus Figur 5 erkennbar ist, in radialer Richtung gegeneinander versetzt. Der radiale Versatz ist zweckmäßig kleiner als der Bohrungsdurchmesser. Die Bohrungen 11 werden durch den zugeordneten Kolbenring 3 verschleißabhängig nach und nach aufgesteuert. Im Ausgangszustand greift der Kolbenring 3 mit seiner radial inneren Kante 12 soweit in die Nut 5 ein, daß alle Bohrungen 11 mit Ausnahme der am weitesten radial innen gelegenen Bohrung 11 abgedeckt und damit verschlossen sind. Sobald der Kolbenring 3 im Bereich seines Außenumfangs verschleißt und damit in radialer Richtung dünner wird, wandert der Kolbenring 3 und damit auch seine radial innere Kante 12 nach radial außen, wie in Figur 5 durch einen Pfeil und unterbrochene Linien angedeutet ist. Hierbei überfährt die Kante 12 nach und nach immer mehr Bohrungen 11, wodurch diese geöffnet werden, so daß sich nach und nach ein immer größerer Gesamtquerschnitt der geöffneten Bohrungen 11 ergibt.

Anstelle der Bohrungen 11 können auch im Bereich der Unterseite des Kolbenrings 3 d.h. der am Steg anliegenden Seite vorgesehene, aus diesem ausgenommene Nuten der in Figur 2 bei 13 angedeuteten Art vorgesehen sein. Auch diese Nuten 13 bilden zusammen mit den Spalten 7 und 8 einen um den betreffenden Kolbenring 3 herumführenden Strömungsweg. Die Nuten 13 gehen, wie die Figuren 6 bis 8 zeigen, über die radiale Dicke des zugeordneten Kolbenrings 3 durch und besitzen zumindest auf einem Teil ihrer radialen Länge derart gegeneinander angestellte Seitenflanken, daß sich der lichte Nutquerschnitt von radial außen nach radial innen fortschreitend erweitert.

Bei der Ausführung gemäß Figur 6 besitzt die Nut 13 einen durchgehend sich erweiternden Querschnitt. Bei der Ausführung gemäß Figur 7 besitzt die Nut 13 einen vom radial äußeren Kolbenringumfang ausgehenden Abschnitt mit nach innen sich erweiterndem Querschnitt und einen hieran sich anschließenden, inneren Abschnitt mit gleichbleibendem Querschnitt. Der Abschnitt mit nach innen sich erweiterndem Querschnitt erstreckt sich etwa über den äußeren Bereich des zugeordneten Kolbenrings 3, der im Laufe der Zeit durch Verschleiß abgearbeitet wird. Die Nut 13 wird durch den jeweils zugeordneten Steg 6 bis auf den radial äußeren Bereich zwischen der Umfangskante 14 der Deckfläche des Stegs 6 und dem benachbarten Innenumfang des Zylinders 2 abgedeckt. Der wirksame Auslaßquerschnitt der Nut 13 befindet sich dementsprechend bei der Kante 14. Diese ist stationär. Der Kolbenring 3 wandert mit zunehmendem Verschleiß nach radial außen, wie in Figur 6 durch einen Pfeil angedeutet ist, so daß immer breitere Bereiche der Nut 13 die Kante 14 passieren, wie in Figur 6 mit unterbrochenen Linien angedeutet ist. Die zunächst von der Kante 14 überbrückte Breite der Nut 13 ist mit S bezeichnet. Nach einem Verschließ der Dicke V beträgt diese Breite S' Hieraus ist ersichtlich, daß der wirksame Auslaßquerschnitt der Nut 13 mit zunehmendem Verschleiß zunimmt. Dasselbe gilt für die Ausführung gemäß Figur 7 bis zum Erreichen des radial inneren, parallele Seitenflanken aufweisenden Abschnitts der Nut 13. Bei den Ausführungen gemäß Figuren 6 und 7 ergibt sich im Gegensatz zur Ausführung gemäß Figuren 4 und 5 eine kontinuierliche Vergrößerung des wirksamen Auslaßquerschnitts der Nut 13 und dementsprechend des Durchlaßvermögens eines durch eine solche Nut gebildeten Leckagedurchlasses.

Bei der Ausführung gemäß Figur 8 besitzt die Nut 13 im radial äußeren Bereich des zugeordneten Kolbenrings 3 parallele Seitenflanken. Anschließend sind die Seitenflanken so gegeneinander angestellt, daß ihr Abstand mit zunehmender Entfernung vom radial äußeren Umfangsbereich des Kolbenrings 3 zunimmt. Hierbei ergibt sich zunächst ein gleichbleibend, kleiner, wirksamer Auslaßquerschnitt der Nut 13. Nachdem ein bestimmter Verschleiß eingetreten ist und der Nutabschnitt mit sich nach innen erweiternder Breite in den Bereich der Kante 14 kommt, vergrößert sich der wirksame Auslaßquerschnitt der Nut 13 mit weiter zunehmendem Verschleiß. Eine Ausführung hier vorliegender Art kann beispielsweise Anwendung finden, wenn während des Einlaufens des Kolbenrings 3 eine gleichbleibende Leckage erwünscht ist. Auch andere Nutformen können verwirklicht werden, z.B. mit von radial außen nach innen abnehmendem Nutquerschnitt, was zur Bewerkstelligung günstiger Einlaufverhältnisse in manchen Fällen zweckmäßig ist.

Auch den Standardkolbenringen 4 können zusätzlich zu ihrem Spalt 10 noch weitere Leckagedurchlässe zugeordnet sein, wie in Figur 3 durch eine im Bereich der Unterseite des Kolbenrings 4 angeordnete Nut 15 angedeutet ist. Diese kann, wie am besten aus Figur 9 ersichtlich ist, so ausgebildet sein, daß ihr Querschnitt von radial außen nach radial innen abnimmt. Bei einer derartigen Gestaltung der Nut 15 ist der wirksame Auslaßquerschnitt der Nut 15 an der Kante 14 des Stegs 6 bei Aufnahme des Betriebs am größten und nimmt mit zunehmendem Verschleiß ab. Es ergibt sich dementsprechend eine zur Entwicklung im Bereich des Spalts 10 gegenläufige Entwicklung. Dies macht es möglich, die Vergrößerung des wirksamen Durchlaßquerschnitts des Spalts 10 durch eine Verkleinerung des wirksamen Durchlaßquerschnitt der Nut 15 bzw. der am Umfang des zugeordneten Kolbenrings 4 vorgesehenen Nuten 15 auszugleichen oder jedenfalls abzuschwächen.

Anstelle der Nuten 13 bzw. 15 können die Kolbenringe 3 bzw. 4 auch mit im Bereich ihrer Peripherie angeordneten, in axialer Richtung durchgehenden Ausnehmungen versehen sein, wie die Figuren 10 bis 12 zeigen. Der der Figur 10 zugrunde liegende Kolbenring ist mit einer in axialer Richtung durchgehenden, umfangsseitigen Nut 16 versehen, deren lichte Weite nach radial innen zunimmt. Diese Nut 16 wird durch den zugeordneten Steg 6 des Kolbens bis auf den außerhalb der Außenkante 14 liegenden Bereich abgedeckt. Mit zunehmendem Verschleiß des Kolbenrings wandert dieser immer weiter nach außen, womit immer breitere Bereiche der Nut 16 nicht mehr abgedeckt sind. Hierbei ergibt sich dementsprechend dieselbe Wirkung wie bei der Anordnung gemäß Figuren 6 und 7. Der der Figur 11 zugrunde liegende Kolbenring ist mit einer in axialer Richtung durchgehenden, umfangsseitigen Nut 17 versehen, deren lichte Weite nach radial innen abnimmt. Hiermit läßt sich z.B. dieselbe Wirkung erzielen wie mit der Anordnung gemäß Figur 9, da mit zunehmendem Verschleiß des Kolbenrings immer schmälere Bereiche der Nut 17 die Kante 14 des Stegs 6 passieren.

Der der Figur 12 zugrunde liegende Kolbenring ist mit einer umfangsseitigen, in axialer Richtung durchgehenden Nut 18 und dieser benachbarten, in axialer Richtung durchgehenden, umfangsnah angeordneten Bohrungen 19 versehen. Die hier vorgesehenen, in axialer Richtung durchgehenden Ausnehmungen des zugrunde liegenden Kolbenrings sind in radialer Richtung gegeneinander versetzt. Die Nut 18 wird von der Kante 14 des zugeordneten Stegs 6 von Anfang an nur teilweise abgedeckt. Mit zunehmendem Verschleiß des zugrunde liegenden Kolbenrings werden auch die Bohrungen 19 nacheinander geöffnet, wodurch ein mit zunehmendem Verschleiß sich vergrößernder, gemeinsamer Durchlaßquerschnitt ergibt. Der radiale Versatz der Bohrungen 19 ist dementsprechend kleiner als ihr Durchmesser. Selbstverständlich wäre auch hier eine Anordnung möglich, bei der der Durchlaßquerschnitt mit zunehmendem Verschleiß abnimmt.

## Patentansprüche

1. Hubkolbenbrennkraftmaschine, insbesondere Großdieselmotor, mit wenigstens einem in einem Zylinder (2) angeordneten Kolben (1), der mit einem Kolbenringpaket mit mehreren am Zylinder (2) anliegenden, in einer jeweils zugeordneten Nut (5) aufgenommenen Kolbenringen (3,4) versehen ist, bestehend aus wenigstens einem gasdichten, ineinander eingreifende Enden (9) ausweisenden Kolbenring (3) und/oder wenigstens einem Standardkolbenring (4) mit unter Bildung eines einen Leckagedurchlaß ergebenden Spalts (10) voneinander beabstandeten Enden, wobei zumindest jedem gasdichten Kolbenring (3) wenigstens ein extra vorgesehener Leckagedurchlaß zugeordnet ist, **dadurch gekennzeichnet, daß** die jeweils nicht durch einen zwischen zwei Kolbenringenden vorgesehenen Spalt (10) gebildeten Leckagedurchlässe (11,13,15,16,17,18,19) so ausgebildet sind, daß sich ihr wirksamer Querschnitt bei Verschleiß des jeweils zugeordneten Kolbenrings (3,4) ändert.

2. Hubkolbenbrennkraftmaschine nach Anspruch 1, **dadurch gekennzeichnet, daß** die den gasdichten Kolbenringen (3) zugeordneten Leckagedurchlässe (11,13,16,18,19) so ausgebildet sind, daß die gemeinsame Leckage aller jeweils einem gasdichten Kolbenring (3) zugeordneten Leckagedurchlässe in etwa der Leckage jedes Standardkolbenrings (4) entspricht und mit zunehmendem Verschleiß der Kolbenringe (3,4) in etwa im selben Umfange zunimmt.

3. Hubkolbenbrennkraftmaschine nach einem der vorliegenden Ansprüche, **dadurch gekennzeichnet, daß** den Standardkolbenringen (4) außer dem durch ihre Enden jeweils begrenzten Spalt (10) wenigstens ein zusätzlicher Leckagedurchlaß (15,17) zugeordnet ist, dessen Leckagevermögen mit zunehmendem Verschleiß der Kolbenringe abnimmt.

4. Hubkolbenbrennkraftmaschine nach einem der vorliegenden Ansprüche, **dadurch gekennzeichnet, daß** zumindest ein Kolbenring (3,4) mit umfangsseitigen, in axialer Richtung durchgehenden Nuten (16) versehen ist, die zumindest auf einem Teil ihrer radialen Tiefe unparallele Flanken aufweisen.

5. Hubkolbenbrennkraftmaschine nach einem der vorliegenden Ansprüche, **dadurch gekennzeichnet, daß** zumindest ein Kolbenring (3,4) zumindest mit peripherienah angeordneten, in axialer Richtung durchgehenden Ausnehmungen (18,19) versehen ist, die in radialer Richtung gegeneinander versetzt sind.

6. Hubkolbenbrennkraftmaschine nach einem der vorhergehenden Ansprüche, **dadurch gekennzeichnet, daß** wenigstens ein Kolbenring (3,4) im Bereich seiner an einem den Kolbenring (3,4) aufnehmenden Steg anliegenden Seite mit über die radiale Dicke durchgehenden Nuten (13,15) versehen ist, die zumindest auf einem Teil ihrer radialen Länge durch unparallele Flanken begrenzt sind.

7. Hubkolbenbrennkraftmaschine nach einem der vorhergehenden Ansprüche, **dadurch gekennzeichnet, daß** wenigstens ein einen Kolbenring (3,4) aufnehmender Steg (6) des Kolbens (1) mit vom radial inneren Bereich der dem Kolbenring (3,4) zugeordneten Nut (5) des Kolbens (1) ausgehenden, an seinem Außenumfang ausmündenden Bohrungen (11) versehen ist, deren Eingänge in radialer Richtung gegeneinander versetzt sind.

## Claims

1. Internal combustion piston engine, especially large diesel engine, comprising at least one piston (1) arranged in a cylinder (2) and being provided with a set of piston rings comprising several piston rings (3, 4) contacting the cylinder (2) and each being accommodated in a respectively allocated groove (5), said set consisting of at least one gas-tight piston ring (3) having engaging ends (9) and/or at least one standard piston ring (4) having spaced ends forming a gap resulting in a leak passage, at least one additionally provided leak passage being allocated to at least each gas-tight piston ring (3), **characterized in that** each of the leak passages (11, 13, 15, 16, 17, 18, 19) which are not formed by a gap (10) provided between two piston ring ends are formed in such a way that their effective cross section changes upon wear of the allocated piston ring (3, 4).

2. Internal combustion piston engine according to claim 1, **characterized in that** the leak passages (11, 13, 16, 18, 19) allocated to the gas-tight piston rings (3) are formed in such a way that the common leakage of all leak passages allocated to each of the gas-tight piston rings (3, 4) approximately corresponds to the leakage of each standard piston ring (4) and increases with the increasing wear of the piston rings (3, 4) in about the same scope.

3. Internal combustion piston engine according to any one of the preceding claims, **characterized in that** at least one additional leak passage (15, 17) is allocated to the standard piston rings (4) besides the gap (10) defined by their ends, the leakage capacity of which decreases with increasing wear of the piston rings.

4. Internal combustion piston engine according to any one of the preceding claims, **characterized in that** at least one piston ring (3, 4) is provided with peripheral grooves (16) passing in the axial direction and comprising at least over a part of their radial depth non-parallel flanks.

5. Internal combustion piston engine according to any one of the preceding claims, **characterized in that** at least one piston ring (3, 4) is provided at least with recesses (18, 19) arranged near the periphery, passing in the axial direction and being radially offset.

6. Internal combustion piston engine according to any one of the preceding claims, **characterized in that** at least one piston ring (3, 4) is provided with grooves (13, 15) in the area of its side contacting a web accommodating the piston ring (3, 4), said grooves passing through the radial thicknesss and being limited at least over a part of their radial length by non-parallel flanks.

7. Internal combustion piston engine according to any one of the preceding claims, **characterized in that** at least one web (6) of the piston (1) accommodating a piston ring (3, 4) is provided with bores (11) starting from the radial inner area of the groove (5) allocated to the piston ring (3, 4) and opening at the outer periphery of the web, the inlets of said bores being radially offset.

## Revendications

1. Moteur à combustion interne à piston alternatif, en particulier grand moteur Diesel, avec au moins un piston (1) qui est disposé dans un cylindre (2) et qui est pourvu d'un paquet de segments de piston avec plusieurs segments de piston (3, 4) s'appuyant sur le cylindre (2) et reçus dans une rainure (5) respectivement associée, se composant d'au moins un segment de piston (3) étanche aux gaz présentant des extrémités (9) se prenant l'une dans l'autre et/ou d'au moins un segment standard de piston (4) avec des extrémités espacées l'une de l'autre en formant une fente (10) créant un passage de fuite, du moins à chaque segment de piston (3) étanche aux gaz étant associé au moins un passage de fuite prévu en plus, **caractérisé par le fait que** les passages de fuite (11, 13, 15, 16, 17, 18, 19) qui ne sont respectivement pas formés par une fente (10) prévue entre deux extrémités de segment de piston sont réalisés de telle manière que leur section transversale effective change en cas d'usure du segment de piston (3, 4) respectivement associé.

2. Moteur à combustion interne à piston alternatif selon la revendication 1, **caractérisé par le fait que** les passages de fuite (11, 13, 16, 18, 19) associés aux segments de piston (3) étanches aux gaz sont réalisés de telle manière que la fuite commune de tous les passages de fuite associés respectivement à un segment de piston (3) étanche aux gaz correspond à peu près à la fuite de chaque segment standard de piston (4) et augmente, avec une usure croissante des segments de piston (3, 4), à peu près dans la même mesure.

3. Moteur à combustion interne à piston alternatif selon l'une des revendications précédentes, **caractérisé par le fait que** l'on associe aux segments standard de piston (4), outre la fente (10) limitée respectivement par leurs extrémités, au moins un passage supplémentaire de fuite (15, 17) dont la capacité de fuite diminue avec une usure croissante des segments de piston.

4. Moteur à combustion interne à piston alternatif selon l'une des revendications précédentes, **caractérisé par le fait que** du moins un segment de piston (3, 4) est pourvu de rainures (16) situées sur la périphérie et continues dans la direction axiale qui, au moins sur une partie de leur profondeur radiale, présentent des flancs non parallèles.

5. Moteur à combustion interne à piston alternatif selon l'une des revendications précédentes, **caractérisé par le fait que** du moins un segment de piston (3, 4) est pourvu au moins de creux (18, 19) disposés près de la périphérie et continus dans la direction axiale qui sont décalés l'un contre l'autre dans la direction radiale.

6. Moteur à combustion interne à piston alternatif selon l'une des revendications précédentes, **caractérisé par le fait qu'**au moins un segment de piston (3, 4) est, dans la zone de son côté s'appuyant sur une entretoise recevant le segment de piston (3, 4), pourvu de rainures (13, 15) continues sur l'épaisseur radiale qui, au moins sur une partie de leur longueur radiale, sont limitées par des flancs non parallèles.

7. Moteur à combustion interne à piston alternatif selon l'une des revendications précédentes, **caractérisé par le fait qu'**au moins une entretoise (6) du piston (1), laquelle reçoit un segment de piston (3, 4), est pourvue de perçages (11) qui partent de la zone radialement intérieure de la rainure (5) du piston (1) associée au segment de piston (3, 4) et qui débouchent sur la périphérie extérieure de l'entretoise, les entrées desdits perçages étant décalées l'une contre l'autre dans la direction radiale.
